# EUROPÄISCHE PATENTSCHRIFT

(11) **EP 1 300 286 B1**
(45) Veröffentlichungstag und Bekanntmachung des Hinweises auf die Patenterteilung: **16.11.2005**
(21) Anmeldenummer: 02020860.9
(22) Anmeldetag: 18.09.2002
(51) Int. Cl.: B60Q 1/04, B60R 21/34, B62D 25/12

(54) **Karosserie eines Personenkraftwagens**
Passenger vehicle body
Carrosserie de véhicule de tourisme

(30) Priorität: 05.10.2001 DE 10149120
(43) Veröffentlichungstag der Anmeldung: 09.04.2003
(73) Patentinhaber: DaimlerChrysler AG, 70567 Stuttgart (DE)
(72) Erfinder: Brown, Garry, Nuneaton CV10 9TF (GB); Frank, Thomas, 70619 Stuttgart (DE); Rathje, Klaus, 71157 Hildrizhausen (DE); Tomlin, Oliver, Leicestershire LE10 3LW (GB); Ziegs, Maya, 72119 Ammerbuch (DE)

(56) Entgegenhaltungen:
- EP-A- 1 120 309
- FR-A- 2 710 592
- US-A- 3 869 164
- US-A- 4 359 120

## Beschreibung

Die Erfindung bezieht sich auf eine Karosserie eines Personenkraftwagens mit Übergangsbereich zwischen Scheinwerfer und hochklappbarem Vorderbereich einer Motor- bzw. Fronthaube, welcher mit einem schalenartigen Innenteil der Haube über Puffern auf einer Karosseriestruktur abgestützt ist, wobei das Innenteil an den Puffern auftretende Stützkräfte großflächig in die Haube einleitet und ein Abstandsraum zwischen Scheinwerfer und Haube nach vorn durch eine breite und biegeweiche Randzone der Haube abgeschlossen sein kann.

Im Hinblick auf den Schutz von Fußgängern bei Kollisionen mit Kraftfahrzeugen soll deren Frontbereich nachgiebig ausgebildet sein, um bei Unfällen auftretende Stoßbelastungen des Fußgängers durch energieabsorbierende Verformung von Fahrzeugteilen zu vermindern.

Da Scheinwerfer als vergleichsweise steife und schwere Baugruppen ausgebildet sein müssen, um die gewünschten lichttechnischen Qualitäten zu gewährleisten, ist die vorgenannte Forderung technisch nur schwer erfüllbar.

Bislang bietet der Stand der Technik keine überzeugenden Lösungen.

Nach der FR 2 710 592 A1, die eine Karosserie der eingangs angegebenen Art betrifft, ist vorgesehen, die typischerweise belastbar und stabil gehalterten Scheinwerfergehäuse als Tragteile für die Fronthaube eines Personenkraftwagens zu benutzen, d.h. der hochklappbare Vorderbereich der Fronthaube ist im Schließzustand der Haube über Puffern unmittelbar auf den Scheinwerfergehäusen abgestützt. Die Höhe des Abstandsraumes zwischen Scheinwerfer und Haube wird bei der Karosserie der FR 2 710 592 A1 durch die regelmäßig relativ geringe Höhe der Puffern bestimmt, so das im Ergebnis im Vorderbereich der Haube nur ein vergleichsweise kleiner Verformungsraum zum Schutz von Fußgängern zur Verfügung steht.

Aus der DE 38 02 104 A1 ist es bekannt, den Scheinwerfer innerhalb der Karosserie an vergleichsweise leicht verformbaren Halterungen zu befestigen und am gesamten Randbereich des Scheinwerfers innerhalb der Karosserie einen Freiraum vorzusehen, in den der Scheinwerfer bei einer Kollision eintauchen kann. Gleichwohl bildet der Scheinwerfer für einen Fußgänger bei einem Zusammenstoß mit dem Fahrzeug eine erhebliche Verletzungsgefahr, weil aufgrund des Gewichtes bzw. der Masse des Scheinwerfers bei einer Kollision mit dem Fußgänger unvermeidlich hohe Trägheitskräfte auftreten, die zu einer hohen Stoßbelastung des Fußgängers führen.

Die DE 27 11 339 A1 zeigt eine Fronthaube mit am vorderen Haubenrand angeordnetem Schwenklager, d.h. der in Fahrzeuglängsrichtung hintere Haubenteil ist aufklappbar ausgebildet. Dabei soll das Schwenklager nachgiebig angeordnet sein, so dass sich die Haube bei einer Kollision des Fahrzeuges mit einem Fußgänger zum Fahrzeugheck hin zu verschieben vermag. Auch hier müssen hohe Trägheitskräfte in Kauf genommen werden, die bei einer Kollision des Fahrzeuges mit einem Fußgänger zu hoher Stoßbelastung des Fußgängers führen. Im Übrigen müssen die Schwenklager der Haube bei normalem Fahrbetrieb hohen Belastungen, beispielsweise durch Erschütterungen und Windkräfte, standhalten, so dass die Lagerung der Haube vergleichsweise steif und unnachgiebig ausgebildet sein muss.

Eine ähnliche Anordnung ist Gegenstand der EP 0 509 690 B1, so dass die vorgenannten Nachteile auch hier vorliegen.

Nach der DE 37 28 752 C1 ist vorgesehen, den Befestigungsrahmen der Frontscheibe des Scheinwerfers steif auszubilden, jedoch nachgiebig zu haltern. Auf diese Weise kann die Gefahr von Schnittverletzungen des Fußgängers vermindert werden. Allerdings muss eine vergleichsweise steife Aufschlagfläche in Kauf genommen werden.

Ähnliches gilt die Scheinwerferfrontscheibe der EP 1 048 895 A1. Hier ist an der Frontscheibe eine Randwulst angeformt, an den ein mit dem Scheinwerfergehäuse verbundener, zur Frontscheibe im wesentlichen vertikaler Steg mit nachgiebig ausgebildetem Übergangsbereich am Randwulst anschließt.

Gemäß der EP 1 078 826 A1 ist es bekannt, die Motorhaube eines Personenkraftwagens so zu lagern, dass sie sich bei einer Kollision mit einem Fußgänger aufstellt und einen verformbaren Schild vor der Windschutzscheibe des Fahrzeuges bildet.

Eine prinzipiell ähnliche Konstruktion ist Gegenstand der DE 27 11 338 B2, in der vorgesehen ist, vor der Windschutzscheibe unterhalb des hochklappbaren Hinterbereiches der Fronthaube einen Airbag anzuordnen, der bei einer Kollision des Fahrzeuges die Haube hochhebt. Aufgrund der stabilen Schwenklagerung des Vorderbereiches der Haube besteht für einen Fußgänger bei einer Kollision mit dem Fahrzeug gleichwohl eine hohe Verletzungsgefahr.

Die US 5 706 908 zeigt vorteilhafte Konstruktionen für verformbare Randbereiche aneinander angrenzender Karosserieteile.

Aus der DE 199 59 892 A1 ist es bekannt, seitlich einer Fronthaube seitwärts nachgiebige Karosserieflanken anzuordnen, um eine übermäßig steife Abstützung der Haubenlängsränder zu vermeiden, wenn eine Person auf die gewölbte Fronthaube aufschlägt und deren Längsränder zur Seite drängt.

Die US 6 042 255 zeigt die Ausbildung von Scheinwerfern mit sehr großen, in die Karosserieflanke bzw. Karosserieoberseite hineingezogenen Frontglasflächen. Das Scheinwerfergehäuse hat eine hutförmige Ausbildung, wobei die Scheinwerferlampen in einem napfartigen Mittelteil des Gehäuses untergebracht sind. An den Rand dieses Mittelteiles schließen sich stabile Flanschflächen an, die dicht unterhalb der in die Karosserieflanke bzw. Karosserieoberseite hineingezogenen Frontscheibenteile des Scheinwerfers angeordnet sind. Das Scheinwerfergehäuse bildet also eine großflächige stabile Struktur.

Aus der GB 20 42 706 A ist es bekannt, nach rückwärts geneigte Frontscheiben von Scheinwerfern stufenförmig auszubilden, um Streuverluste zu vermindern.

Die US 4,359,120 zeigt die Ausbildung zueinander benachbarter Längsseitenränder von Kotflügeln und Fahrzeughauben. Diese in einer gemeinsamen Ebene liegenden Längsränder sind jeweils über Verformungselemente mit steifen Karosserieteilen verbunden, so dass die Karosserie im Bereich von Fugen zwischen Kotflügeln und Hauben vergleichsweise nachgiebig ist.

Aufgabe der Erfindung ist es nun, die Gefahr von Verletzungen eines Fußgängers bei Kollision mit einem Personenwagen im Bereich der Scheinwerfer deutlich zu vermindern und gleichwohl eine relativ große Gestaltungsfreiheit für die Karosserie zu bieten.

Diese Aufgabe wird bei einer Karosserie der eingangs angegebenen Art dadurch gelöst, dass die Randzone der Haube biegeweich ausgebildet ist, und dass das schalenartige Innenteil oberhalb eines Querträgers der Karosseriestruktur angeordnet und über die Puffern auf dem Querträger abstützbar und das Gehäuse des Scheinwerfers vor und unterhalb des Querträgers angeordnet und mit dem Querträger über eine Halterung verbunden ist, wobei zwischen der Oberseite des Scheinwerfergehäuses und der Unterseite des Innenteils ein großer Freiraum verbleibt, welcher durch die biegeweiche Randzone der Haube und/oder durch ein dünnes und leicht zerstörbares, nach oben hochgezogenes Wandteil der Frontscheibe des Scheinwerfers, jeweils mit abstützungsfreiem Anschluss von Haubenvorderrand und Scheinwerferfront aneinander, abgeschlossen ist.

Die Erfindung beruht auf dem allgemeinen Gedanken, frontseitige Karosseriebereiche, die bei einer Kollision mit einem Fußgänger, insbesondere mit einem Kind, typischerweise vom Kopf der Person getroffen werden, unter dem Gesichtspunkt einer weitestgehenden Verminderung der Verletzungsgefahr für den Kopf zu optimieren und entsprechend nachgiebig und energieabsorbierend auszugestalten. Insbesondere schließen der Vorderrand der Motorhaube und die Scheinwerferfront abstützungsfrei aneinander an, und zwar derart, dass oberhalb des Scheinwerfergehäuses ein großer Freiraum für Verformungen der Karosserie gegeben ist. Damit wird gewährleistet, dass eine wünschenswerte Verformung der Motorhaube bei einem Unfall mit einem Fußgänger praktisch uneingeschränkt möglich wird und der Scheinwerfer keine die Verformung der Haube behindernde Störstruktur bilden kann.

Insbesondere wird gewährleistet, dass die Vorderkante der Front- bzw. Motorhaube im Bereich der Leuchteinheit an der Streuscheibe vorbeigleiten kann und ein notwendiger Deformationsweg freigegeben wird bzw. frei ist.

Streuscheibe vorbeigleiten kann und ein notwendiger Deformationsweg freigegeben wird bzw. frei ist.

In diesem Zusammenhang ist zweckmäßig vorgesehen, die Scheinwerferfront unter den Vorderrand der Fronthaube nach Art einer zum Fahrzeugheck hin ansteigenden Rampe fortzusetzen, auf der der Vorderrand der Haube bei Verformung nach abwärts zu gleiten vermag.

Des weiteren hat sich als vorteilhaft herausgestellt, hinter dem Oberrand des Scheinwerfers einen zum Fahrzeugheck sowie nach abwärts erstreckten Freiraum für eine durch Abstützungen ungehinderte Verformung des Vorderrandes bzw. Vorderbereiches der Haube vorzusehen.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung näher beschrieben werden.

Dabei zeigt
- Fig. 1: einen schematisierten Längsschnitt mit in Fahrzeuglängsrichtung erstreckter vertikaler Schnittebene im Bereich des Übergangsbereiches von Motor- bzw. Fronthaube und Scheinwerfer gemäß einer ersten Ausführungsform und
- Fig. 2: ein der Fig. 1 entsprechendes Schnittbild einer weiteren Ausführungsform.

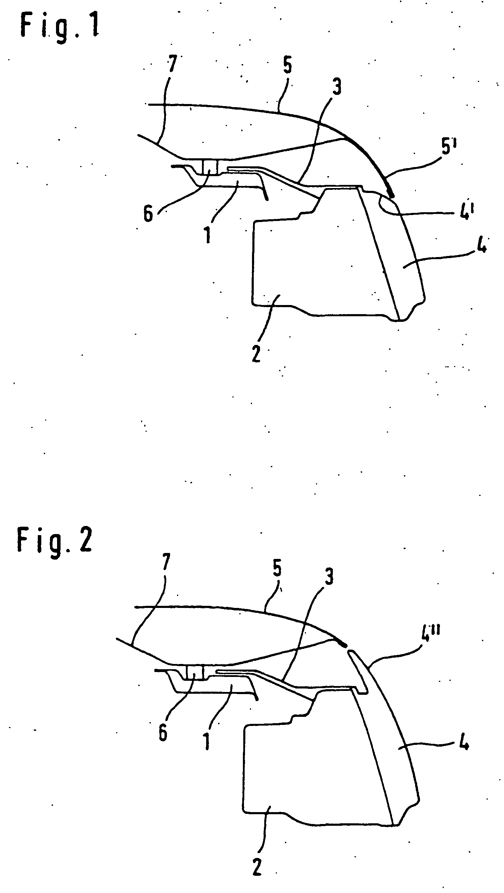

Gemäß Fig. 1 ist im Vorderbereich der Karosserie eines Personenkraftwagens ein in bekannter Weise aus Blechprofilen zusammengesetzter Karosseriequerträger 1 angeordnet, der Teil der tragenden Karosseriestruktur ist. Mit Abstand vor und unterhalb dieses Querträgers 1 ist das Gehäuse 2 eines mit dem Querträger 1 durch eine Halterung 3 verbundenen Scheinwerfers angeordnet, dessen Frontseite in grundsätzlich üblicherweise durch eine Streu- oder Klarglasscheibe 4 gebildet wird.

Auf dem Querträger 1 ruht der Vorderbereich einer nur ausschnittsweise dargestellten Motor- bzw. Fronthaube 5, die an nicht dargestellten, in der Regel, scharnierartigen Schwenklagern hochklappbar angeordnet ist. Im dargestellten Schließzustand ist die Motor- bzw. Fronthaube 5 über Puffern 6 federnd auf dem Querträger 1 abgestützt. Die Puffern 6 können an der Haube 5 oder - vorzugsweise - am Querträger 1 angeordnet sein.

Die Motor- bzw. Fronthaube 5 besitzt oberhalb des Karosseriequerträgers 1 zur Versteifung ein schalenartiges Haubeninnenteil 7 welches die an den Puffern 6 auftretenden Stützkräfte großflächig in die Haube 5 einleitet.

Zwischen der Oberseite des Gehäuses 2 des Scheinwerfers und der Unterseite des Innenteiles 7 verbleibt ein größerer Freiraum, welcher in Fahrzeugrichtung nach vorn durch einen breite und vergleichsweise biegeweiche Randzone 5' der Motor- bzw. Fronthaube 5 abgeschlossen wird.

Dabei übergreift die Randzone 5' in Schließlage der Motor- bzw. Fronthaube 5 einen rampenartig zum Fahrzeugheck hin ansteigenden Randbereich 4' der Streuscheibe 4.

Sollte bei einem Unfall ein Fußgänger, insbesondere mit seinem Kopf, im Bereich der Randzone 5' oder oberhalb des Innenteiles 7 auf die Motor- bzw. Fronthaube 5 aufschlagen, so kann die Motor- bzw. Fronthaube einerseits unter energieabsorbierender Verformung zur Haubeninnenseite hin nachgeben. Andererseits kann der die Streuscheibe 4 übergreifende Rand der Randzone 5' der Haube 5 nach abwärts über die Streuscheibe 4 gleiten, so dass eine Versteifung der Motor- bzw. Fronthaube 5 durch Abstützung auf der Streuscheibe 4 bzw. dem Scheinwerfer weitestgehend ausgeschlossen wird. Die konstruktiv vorgegebenen Verformungseigenschaften der Motor- bzw. Fronthaube können also durch die Scheinwerfer praktisch nicht beeinträchtigt werden.

Die Ausführungsform der Fig. 2 unterscheidet sich von der vorangehend beschriebenen Ausführungsform im wesentlichen dadurch, dass der zwischen Oberseite des Gehäuses 2 des Scheinwerfers und Unterseite des Innenteils 7 der Motor- bzw. Fronthaube 5 ausgebildete Freiraum für eine eventuelle Verformung der Haube 5 in Fahrzeugrichtung nach vorne vorwiegend durch einen vergleichsweise dünnen, nach oben hochgezogenen Wandteil 4" der Streuscheibe 4 abgeschlossen wird.

Falls ein Fußgänger bei einem Unfall auf den Frontbereich der Haube 5 aufschlagen sollte, insbesondere mit seinem Kopf, kann der vordere Rand der Haube 5 ohne Behinderung durch die Streuscheibe 4 und/oder die Struktur des Gehäuses 2 des Scheinwerfers in den vorgenannten Freiraum unter energieabsorbierender Verformung eintreten. Auch hier bleiben die konstruktiv vorgegebenen Verformungseigenschaften der Haube 5 unverändert, weil der vordere Randbereich der Haube 5 im Scheinwerferbereich abstützungsfrei angeordnet bzw. ausgebildet ist und innen am Wandteil 4" entlang abgleiten kann.

## Patentansprüche

1. Karosserie eines Personenkraftwagens mit Übergangsbereich zwischen Scheinwerfer (2, 4) und hochklappbarem Vorderbereich einer Motor/Fronthaube (5), welcher mit einem schalenartigen Innenteil (7) der Haube über Puffern (6) auf einer Karosseriestruktur (1) abgestützt ist, wobei das Innenteil (7) an den Puffern (6) auftretende Stützkräfte großflächig in die Haube (5) einleitet und ein Abstandsraum zwischen Scheinwerfer (2, 4) und Haube (5) nach vorn durch eine breite Randzone (5') der Haube (5) abgeschlossen sein kann, **dadurch gekennzeichnet,**
**dass** die Rand zone (5') der Haube (5) biegeweich ausgebildet ist, und **dass** das schalenartige Innenteil (7) oberhalb eines Querträgers (1) der Karosseriestruktur angeordnet und über die Puffern (6) auf dem Querträger (1) abstützbar und das Gehäuse (2) des Scheinwerfers (2, 4) vor und unterhalb des Querträgers (1) angeordnet und mit dem Querträge (1) über eine Halterung (3) verbunden ist, wobei zwischen der Oberseite des Scheinwerfergehäuses (2) und der Unterseite des Innenteils (7) ein großer Freiraum verbleibt, welcher durch die biegeweiche Randzone (5') der Haube (5) und/oder durch ein dünnes und leicht zerstörbares, nach oben hochgezogenes Wandteil (4") der Frontscheibe (4) des Scheinwerfers (2, 4), jeweils mit abstützungsfreiem Anschluss von Haubenvorderrand und Scheinwerferfront aneinander, abgeschlossen ist.

2. Karosserie nach Anspruch 1,
**dadurch gekennzeichnet,**
**dass** der bzw. die Scheinwerfer (2,4) außerhalb einer Zone angeordnet sind, die bei einer Kollision des Fahrzeuges mit einer Person bzw. - insbesondere - einem Kind mit einen Schwellwert überschreitender Wahrscheinlichkeit vom Kopf der Person bzw. des Kindes beaufschlagt wird.

3. Karosserie nach Anspruch 1 oder 2,
**dadurch gekennzeichnet,**
**dass** der Scheinwerfer (2,4) mit seiner Frontseite (4) eine Rampe (4') bildet, die zum Fahrzeugheck hin ansteigt.

4. Karosserie nach einem der Ansprüche 1 bis 3,
**dadurch gekennzeichnet,**
**dass** die Scheinwerferfront (4) unter dem Vorderrand (5') der Motor- bzw. Fronthaube (5) eine zum Fahrzeugheck hin ansteigende Rampe (4') bildet, auf der der Vorderrand (5') der Haube (5) bei Verformung ohne nennenswerte Beeinträchtigung der konstruktiv vorgegebenen Verformungseigenschaften der Motor- bzw. Fronthaube (5) nach abwärts zu gleiten vermag.

## Claims

1. Body of a motor car with a transient area between a head lamp (2, 4) and a front area of an engine / front bonnet (5) which can be raised which is supported (1) with a shell-like inner part (7) of the bonnet by means of buffers (6) on a body structure (1) wherein the inner part (7) introduces bearing pressure arising on the buffers (6) over a large area into the bonnet (5) and a spacing area between a headlamp (2, 4) and a bonnet (5) can be closed to the front by a wide edge area (5') of the bonnet (5),
**characterised in that**
the edge area (5') of the bonnet (5) is elastically formed and the shell-like inner part (7) is arranged above a cross member (1) of the body structure and can be supported by means of the buffers (6) on the cross member and the casing (2) of the headlamp (2, 4) is arranged in front of and below the cross member (1) and connected to the cross member (1) by means of a holding member (3) and wherein between the upper side of the head lamp casing (2) and the lower side of the inner part (7) there remains a large free space which is closed by the elastic edge area (5') of the bonnet (5) and / or by a thin, easily destructible, upwardly raised wall part (4") of the front panel (4) of the head lamp (2, 4), in each case with support-free connection of the front edge of the bonnet and the front of the head lamp to each other.

2. Body according to claim 1,
**characterised in that**
the headlamp(s) (2, 4) are arranged outside of a zone which, in the event of a collision of the vehicle with a person or - in particular - a child, is impacted with probability exceeding a threshold by the head of the person or the child.

3. Body according to claim 1 or 2,
**characterised in that**
the headlamp (2, 4) forms a ramp (4') with its front side (4), said ramp (4') being upwardly inclined towards the rear of the vehicle.

4. Body according to one of the claims 1 to 3,
**characterised in that**
the front of the headlamp (4) forms below the front edge (5') of the engine or front bonnet (5) a ramp (4') which is upwardly inclined towards the rear of the vehicle, on which ramp (4') the front edge (5') of the bonnet (5) can slide downwards in the event of deformation without significant detriment to the constructively given deformation properties of the engine or front bonnet (5).

## Revendications

1. Carrosserie d'un véhicule de tourisme, comprenant une zone de transition entre un projecteur (2,4) et une zone avant, rabattable vers le haut, d'un capot moteur/avant (5), soutenue sur une structure de carrosserie (1) à l'aide d'une partie intérieure (7) du genre d'une coque, du capot, par des tampons (6), la partie intérieure (7) induisant les efforts d'appui, se produisant sur les tampons (6), sur une grande surface, dans le capot (5) et un volume d'espacement entre le projecteur (2,4), et le capot (5) pouvant être fermé vers l'avant par une zone de bordure (5') large du capot (5),
**caractérisé en ce que**,
la zone de bordure (5') du capot (5) présente une souplesse en flexion, et **en ce que** la partie intérieure (7) du genre d'une coque est disposée au-dessus d'une traverse (1) de la structure de carrosserie et est susceptible de prendre appui sur la traverse (1), par l'intermédiaire des tampons (6), et le boîtier (2) du projecteur (2,4) étant disposé à l'avant et au-dessous de la traverse (1) et relié à la traverse (1) par une fixation (3), entre la face supérieure du boîtier de projecteur (2) et la face inférieure de la partie intérieure (7) subsistant un grand espace libre, fermé par la zone de bordure (5'), présentant une souplesse en flexion, du capot (5) et/ou par une partie de paroi (4"), mince et aisément destructible, relevée vers le haut, de la vitre avant (5) du projecteur (2,4), chaque fois avec un raccordement, exempt de soutien, entre le bord avant du capot et l'avant du projecteur, l'un à l'autre.

2. Carrosserie selon la revendication 1,
**caractérisé en ce que**
le ou les projecteurs (2,4) et/sont disposé(s) à l'extérieur d'une zone, qui en cas de collision du véhicule avec une personne ou - en particulier - un enfant, est sollicitée avec une probabilité, dépassant une valeur seuil, par la tête de la personne ou de l'enfant.

3. Carrosserie selon la revendication 1 ou 2,
**caractérisé en ce que**
le projecteur (2,4) forme, avec sa face avant (4), une rampe (4'), évoluant en montant lorsqu'on va vers l'arrière du véhicule.

4. Carrosserie selon l'une des revendications 1 à 3,
**caractérisé en ce que**
l'avant de projecteur (4) forme, au-dessous du bord avant (5') du capot moteur ou capot avant (5), une rampe (4'), évoluant en montant lorsqu'on va vers l'arrière du véhicule, rampe sur laquelle le bord avant (5') du capot (5) peut glisser, en cas de déformation, vers le bas sans dégrader de façon importante les propriétés de déformation, prédéterminées de par la construction, du capot moteur ou capot avant (5).
